# EUROPÄISCHE PATENTSCHRIFT

(11) **EP 2 937 629 B1**
(45) Veröffentlichungstag und Bekanntmachung des Hinweises auf die Patenterteilung: **26.07.2023**
(21) Anmeldenummer: 15164609.8
(22) Anmeldetag: 22.04.2015
(51) Int. Cl.: F21V 31/00, F21V 23/00, H02G 3/22, H02G 15/013

(54) **VERBINDUNGSVORRICHTUNG FÜR EINE LEUCHTE**
MOUNTING DEVICE FOR A LIGHT
DISPOSITIF DE RACCORDEMENT D'UNE LAMPE

(30) Priorität: 25.04.2014 DE 202014101962 U
(43) Veröffentlichungstag der Anmeldung: 28.10.2015
(73) Patentinhaber: Zumtobel Lighting GmbH, 6850 Dornbirn (AT)
(72) Erfinder: Ladstätter, Gerald, 6833 Klaus (AT)
(74) Vertreter: Kiwit, Benedikt

(56) Entgegenhaltungen:
- DE-A1- 2 623 145
- DE-A1-102006 021 809
- DE-U1- 29 900 087
- DE-U1-202005 013 537
- JP-A- 2002 186 154
- US-A- 5 651 606
- US-A1- 2014 041 932

## Beschreibung

### 1. Gebiet der Erfindung

Die vorliegende Erfindung betrifft eine Leuchte, insbesondere eine Feuchtraumleuchte, mit einer Verbindungsvorrichtung.

### 2. Hintergrund

Im Stand der Technik sind Leuchten bekannt, die in ihren Gehäusen, genauer in ihren Gehäusewandungen, verschiedene Sollbruchstellen umfassen, so dass diese bei Bedarf herausgebrochen werden können, um dadurch einen Zugang für externe Kabel (beispielsweise Kabel zur Stromversorgung oder Kabel zum Anschluss an eine Steuervorrichtung) in das Gehäuse bereitstellen zu können.

Insbesondere wenn die Leuchten in deckennähe montiert werden und die Zuführung der Kabel, wie üblich, an der der Deckenseite zugewandten Seite der Leuchte erfolgen soll, müssen die Kabel häufig in relativ engen Radien zu den aus dem Gehäuse herausgebrochenen Zugängen geführt werden. Durch eine solche enge Kabelführung wirken relativ hohe Kräfte auf das Gehäuse der Leuchte bzw. auf die Kabeldichtungen, mit der das Gehäuseinnere vor Verschmutzungen und vor allem vor Feuchtigkeit geschützt wird. In der Praxis hat sich gezeigt, dass aufgrund der hohen Kräfte bei engen Kabelführungen Undichtigkeiten im Übergangsbereich in das Gehäuse auftreten können, was insbesondere bei Feuchtraumleuchten kritisch ist.

DE 299 00 087 U1 zeigt eine mehrteilige Kabeldurchführung für Lichtleitkabel. Die Kabeldurchführung weist ein in einer Öffnung einer Gehäusewand montierbares Durchführungselement auf.

DE 20 2005 013537 U1 zeigt eine Kabeldurchführung, über die ein Beleuchtungsscheinwerfer mit einem Scheinwerferkabel verbunden wird.

DE 26 23 145 A1 zeigt eine aus einem Stecker und aus einer Steckeraufnahme bestehende lösbare Steckverbindung für elektronische Geräte. Die Steckeraufnahme ist in einer Platte des Gerätes angebracht und der Stecker ist mit einem an das Gerät anzuschließenden Zuleitungskabel verbindbar.

JP 2002 186154 A zeigt eine Kabeldurchführung mit einem ringförmigen Flanschabschnitt, an dem die Kabeldurchführung in einer Fahrzeugwand befestigbar ist, und mit einem zylindrischen Abschnitt zur Führung eines Kabels in der Kabeldurchführung.

Ausgehend von diesem Stand der Technik stellt sich die vorliegende Erfindung die Aufgabe, eine Leuchte mit einer Verbindungsvorrichtung bereitzustellen, mit der eine Leuchte einfach und schnell mit externen Kabeln verbunden werden kann, insbesondere ohne dass dabei Zugänge in ein Gehäuse einer Leuchte gebrochen und anschließend wieder abgedichtet werden müssen. Weiterhin stellt sich die vorliegende Erfindung die Aufgabe eine Verbindungsvorrichtung bereitzustellen, mit der Kabel in die Leuchten geführt werden können, ohne dass dabei die Kabel in engen Radien geführt werden müssen, und zwar im Wesentlichen unabhängig von der jeweiligen Einbausituation.

Diese und andere Aufgaben, die beim Lesen der folgenden Beschreibung noch genannt werden oder vom Fachmann erkannt werden können, werden mit dem Gegenstand des unabhängigen Anspruch 1 gelöst. Vorteilhafte Weiterbildungen sind in den abhängigen Ansprüchen genannt.

### 3. Ausführliche Beschreibung der Erfindung

Eine erfindungsgemäße Leuchte, umfasst zumindest eine Verbindungsvorrichtung, welche umfasst: einen Sockel, der mit einem Gehäuse einer Leuchte verbunden ist; wobei der Sockel zumindest eine umlaufende kreisförmige Anlagefläche aufweist, die die angepasst ist, um in eine korrespondierende kreisförmige Aussparung eines Wandungsabschnitts des Gehäuses der Leuchte eingeführt zu werden, und die Anlagefläche mit der Aussparung des Wandungsabschnitts des Gehäuses der Leuchte derart in Anlage bringbar ist, dass der Sockel drehbar in der Aussparung des Gehäuses der Leuchte angeordnet ist. Der Sockel weist eine Öffnung auf, welche im verbundenen Zustand von Sockel und Gehäuse bezüglich der Aussparung des Gehäuses geneigt angeordnet ist und welche angepasst ist, eine als Hohlkörper mit einer außenliegenden Kabelöffnung und einer innenliegenden Kabelöffnung ausgebildete Tülle aufzunehmen. Dabei ist die Verbindungsvorrichtung als integrales einstückiges Bauteil ausgebildet.

Die kreisförmige Anlagefläche des Sockels ist in eine korrespondierende kreisförmige Aussparung im Gehäuse der Leuchte angeordnet, so dass die kreisförmige Anlagefläche des Sockels in der kreisförmigen Aussparung des Gehäuses drehbar angeordnet werden kann. Durch die drehbare Anordnung des Sockels kann die Verbindungsvorrichtung an die am Einbauort vorhandenen Kabelführung angepasst werden, indem die Verbindungsvorrichtung bzw. der Sockel entsprechend zum vorhandenen Kabel hingedreht wird, so dass das Kabel ohne enge Biegeradien an den Sockel herangeführt werden kann. Je nach Bedarf können mit einer erfindungsgemäßen Verbindungsvorrichtung auch Kabel aus der Leuchte herausgeführt werden (beispielsweise um Kabel von der Leuchte an eine benachbarte Leuchte zu führen). Mit anderen Worten kann durch die Drehbarkeit des Sockels die Verbindungsvorrichtung an die entsprechende Situation am Einbauort angepasst werden, so dass engen Radien bei der Kabelführung im Wesentlichen vermieden werden können, und damit auch die Gefahr von Undichtigkeiten aufgrund der hohen auftretenden Kräfte bei einer derartigen Kabelführung.

Die Verbindungsvorrichtung ist angepasst, eine als Hohlkörper mit einer außenliegenden Kabelöffnung und einer innenliegenden Kabelöffnung ausgebildete Tülle aufzunehmen mit der ein Kabel, insbesondere ein Energieversorgungskabel, in das Gehäuse der Leuchte einführbar ist. Eine solche Tülle kann dabei jede geeignete Geometrie aufweisen, die es erlaubt ein Kabel von Außen in das Gehäuseinnere zu führen. Vorzugsweise ist die Tülle dabei ein Hohlkörper mit einer außenliegenden Kabelöffnung und einer innenliegenden Kabelöffnung. Darüber hinaus ist es von Vorteil, wenn im Hohlkörper der Tülle eine Kabelführung durch entsprechende Wandungsabschnitte der Tülle erfolgt, so dass das Ein- bzw. Durchführen des Kabels noch weiter erleichtert werden kann. Auch können im Hohlkörper oder an den Kabelöffnungen Fixiermittel (beispielsweise Rastzungen oder Fixierschlaufen) vorgesehen sein, um ein unbeabsichtigtes Herausgleiten des eingeführten Kabels aus der Verbindungsvorrichtung zu verhindern bzw. um eine entsprechende Kabelentlastung bereitzustellen.

Weiterhin ist es von Vorteil, wenn am Sockel ein Steckverbinder vorgesehen ist, insbesondere ein elektrischer Steckverbinder zum Anschluss der Leuchte an eine Energieversorgung. Ein solcher Steckverbinder kann dabei alternativ oder zusätzlich zur Tülle vorgesehen sein. Eine Verbindung der Leuchte mit externen Kabeln erfolgt in diesem Fall dadurch, dass der Sockel zum Kabel hingedreht wird und der Steckverbinder mit einem am Kabel vorgesehenen korrespondierenden Steckverbinder verbunden wird.

Vorteilhafterweise ist der Sockel aus einem unelastischen Material bereitgestellt ist, insbesondere aus einem Duroplast. Dadurch bleibt der Sockel auch beim Drehen in dem Gehäuse formstabil und eine definierte Anlage der Verbindungsvorrichtung mit dem Gehäuse der Leuchte kann somit gewährleistet werden.

Ferner ist es von Vorteil wenn die Tülle aus einem elastischen Material bereitgestellt ist, insbesondere aus Polyurethan oder aus einem weichem Polyvinylchlorid. Durch die Elastizität der Tülle kann sich diese an die Form des Kabels anpassen bzw. derart eng am Kabel anliegen, dass eine Dichtung zwischen dem Kabel und der Tülle bereitgestellt werden kann. Darüber hinaus können an der Tülle weitere Dichtmittel zum Umschließen des Kabels (beispielsweise elastische Dichtlippen) vorgesehen sein, um die Dichtwirkung noch weiter erhöhen zu können.

Die Tülle ist bezüglich der Aussparung des Wandungsabschnitts des Gehäuses geneigt angeordnet, insbesondere mit einem Winkel zwischen 25° bis 80° DEG, vorzugsweise zwischen 35° bis 60° DEG, weiterhin bevorzugt zwischen 40° bis 50° DEG und besonders bevorzugt mit einem Winkel von 45° DEG. Eine Neigung der Tülle von etwa 45° DEG hat dabei den Vorteil, dass Kabel sowohl parallel zum Wandungsabschnitt, mit dem die Verbindungsvorrichtung mit der Leuchte verbunden ist (also vorzugsweise parallel zur Bodenfläche des Gehäuses der Leuchte), als auch senkrecht dazu knickfrei verbunden werden können. Weiterhin ist es von Vorteil, wenn der Sockel (und vorzugsweise damit auch die Tülle) zumindest teilweise in das Gehäuse der Leuchte hineinragen. Dadurch kann der Platzbedarf zwischen der Leuchte und der Wand, an der die Leuchte montiert werden soll, angepasst bzw. reduziert werden.

Vorteilhafterweise sind an der Tülle Rastmittel vorgesehen, um die Tülle mit dem Sockel zu verrasten. Dadurch besteht bei einer Montage der Leuchte bzw. beim Anschließen des Kabels an die Leuchte die Möglichkeit die Tülle zunächst derart weit auf das Kabel zu schieben, dass diese bei der Verbindung des Kabels mit der Elektronik der Leuchte nicht stört. Daran anschließend kann die Tülle entsprechend bis zum Sockel geschoben und mit diesem verrastet werden.

Weiterhin ist es von Vorteil, dass der Sockel Dichtmittel umfasst, um eine dichtende Verbindung mit dem Wandungsabschnitt des Gehäuses der Leuchte bereitzustellen. Vorzugsweise umfassen die Dichtmittel zumindest eine umlaufende Dichtlippe oder einen umlaufenden Dichtring, der zwischen Sockel und dem Gehäuse der Leuchte vorgesehen ist.

Vorzugsweise sind am Sockel Rastmittel zum Verrasten mit dem Wandungsabschnitt des Gehäuses der Leuchte vorgesehen. Solche Rastmittel können beispielsweise durch eine umlaufende Rastzunge oder durch entsprechende Rastabschnitte bereitgestellt werden, die mit dem Wandungsabschnitt zusammenwirkt bzw. zusammenwirken. Durch derartige Rastmittel kann die Verbindungsvorrichtung fest mit dem Gehäuse verbunden werden, ohne dass dadurch die Drehbarkeit der Verbindungsvorrichtung wesentlich beeinträchtigt wird.

Die Verbindungsvorrichtung ist als integrales einstückiges Bauteil ausgebildet, wobei dieses vorzugsweise mittels eines 2-Komponenten-Spritzgußverfahrens hergestellt sein kann. Durch die integrale Ausbildung der Verbindungsvorrichtung ist diese besonders Formstabil und bei einer Montage besonders einfach zu Handhaben. Je nach Anwendung kann es bevorzugt sein die Leuchte entweder, wie oben beschrieben, modular oder als integrales Bauteil auszubilden. Bei letzterem ergeben sich bis auf die integrale Ausbildung der Verbindungsvorrichtung, keine weiteren Unterschiede zur modularen Ausbildung der Verbindungsvorrichtung.

Ferner kann die Leuchte eine Feuchtraumleuchte, die zumindest eine vorangehend beschriebene Verbindungsvorrichtung umfasst, sein. Soweit Kabel an die Leuchte und von der Leuchte weggeführt werden sollen, ist es bevorzugt, dass die Leuchte zumindest zwei der vorangehend beschriebenen Verbindungsvorrichtungen umfasst. Dabei ist eine Verbindungsvorrichtung für die an die Leuchte zu führenden Kabel und die weitere Verbindungsvorrichtung für die von der Leuchte wegzuführenden Kabel vorgesehen.

Vorteilhafterweise ist die Leuchte an einer Raumdecke anordenbar und die zumindest eine Verbindungsvorrichtung ist an der der Raumdecke zugewandten Seite der Leuchte angeordnet. Bei einer solchen Anordnung der Leuchte an einer Raumdecke ist es weiterhin von Vorteil, dass die Leuchte an der der Raumdecke zugewandten Seite Abstandhalter (beispielsweise in Form entsprechender Hülsen) umfasst, um dadurch einen vordefinierten Abstand der Leuchte zur Raumdecke bereitzustellen, so dass in diesem Zwischenraum die Kabel angeordnet werden können.

### 4. Beschreibung einer bevorzugten Ausführungsform

Nachfolgend wird eine detaillierte Beschreibung der Figuren gegeben, in dieser zeigt:
- **Figur 1**: eine schematische Explosionsansicht einer bevorzugten Ausführungsform einer erfindungsgemäßen Leuchte mit einer erfindungsgemäßen Verbindungsvorrichtung;
- **Figur 2**: eine schematische Querschnittsansicht der in Figur 1 gezeigten Verbindungsvorrichtung im eingebauten Zustand;
- **Figur 3**: eine schematische Ansicht der in Figur 1 gezeigten Verbindungsvorrichtung im eingebauten Zustand;
- **Figur 4**: eine schematische Seitenansicht der in Figur gezeigten Verbindungsvorrichtung;
- **Figur 5**: eine schematische Ansicht einer erfindungsgemäßen Leuchte mit zwei erfindungsgemäßen Verbindungsvorrichtungen, wobei die Verbindungsvorrichtungen in dieselbe Richtung ausgerichtet sind;
- **Figur 6**: eine schematische Ansicht einer erfindungsgemäßen Leuchte mit zwei erfindungsgemäßen Verbindungsvorrichtungen, wobei die Verbindungsvorrichtungen zueinander ausgerichtet sind;
- **Figur 7**: eine schematische Ansicht einer erfindungsgemäßen Leuchte mit zwei erfindungsgemäßen Verbindungsvorrichtungen, wobei die Verbindungsvorrichtungen in entgegengesetzte Richtungen ausgerichtet sind;
- **Figur 8**: eine schematische Ansicht der in Figur 7 gezeigten Leuchte mit geöffnetem Gehäuse.

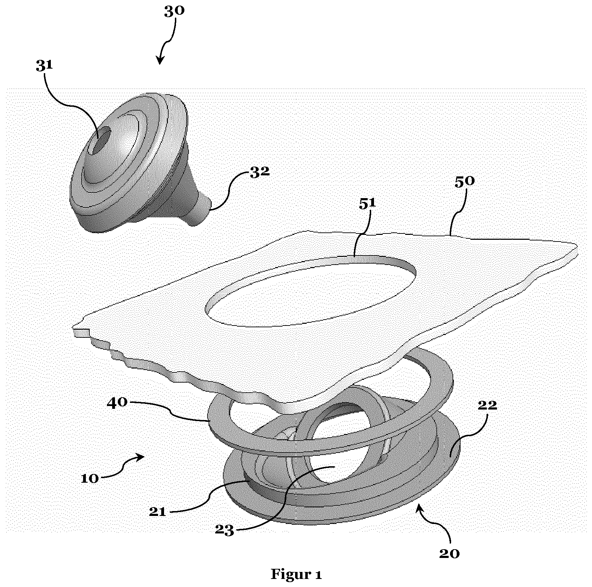

Figur 1 zeigt eine schematische Explosionsansicht einer bevorzugten Ausführungsform einer erfindungsgemäßen Verbindungsvorrichtung 10. Die bevorzugte Ausführungsform der Verbindungsvorrichtung 10 umfasst einen Sockel 20, eine Tülle 30 und einen Dichtring 40, der zwischen dem Sockel 20 und einem Wandungsabschnitt 50 eines Gehäuses einer Leuchte (nicht gezeigt) vorgesehen ist.

In der gezeigten bevorzugten Ausführungsform ist der Sockel 20 aus einem Duroplast hergestellt (also einem relativ festen, unelastischen Material), so dass eine hohe Formstabilität des Sockels 20 gewährleistet ist.

Der Sockel 20 umfasst eine umlaufende Anlagefläche 21, die in Draufsicht gesehen kreisförmige ausgebildet ist und die angepasst ist, um in eine korrespondierende kreisförmige Aussparung 51 des Wandungsabschnitts 50 des Gehäuses der Lampe eingeführt zu werden. Dabei sind die Anlagefläche 21 und die Aussparung 51 derart angepasst, dass der Sockel 20 in der Aussparung 51 gedreht werden kann.

Wie in Figur 1 gut zu erkennen, umfasst der Sockel 20 weiterhin eine Auflagefläche 22 auf die der Dichtring 40 aufgelegt werden kann und an die Unterseite des Wandungsabschnitts 50 gedrückt werden kann, so dass eine Abdichtung zwischen Sockel 20 und dem Wandungsabschnitt 50 bereitgestellt werden kann. Der Dichtring 40 ist dabei vorzugsweise aus einem elastischen ggf. kompressiblen Material hergestellt.

Ferner weist der Sockel 20 eine Öffnung 23 auf, die angepasst ist, um die Tülle 30 aufzunehmen. Wie in Figur 1 zu erkennen, ist die Öffnung 23 ca. um ca. 45° DEG bezüglich des Wandungsabschnitts 50 geneigt angeordnet. Dadurch ist auch die Tülle 30 hinsichtlich des Wandungsabschnitts 50 um ca. 45° DEG geneigt ausgerichtet, wenn diese mit dem Sockel 20 verbunden ist. Die Öffnung 23 kann, je nach Einbausituation, auch eine andere Ausrichtung (beispielsweise eine senkrechte, d.h. um 90° DEG geneigt bezüglich des Wandungsabschnitts 50) aufweisen.

In der gezeigten bevorzugten Ausführungsform ist die Tülle 30 als Hohlkörper mit einer außenliegenden Kabelöffnung 31 und einer innenliegenden Kabelöffnung 32 ausgebildet. Die Tülle 30 ist vorzugsweise aus einem weichen Polyurethan oder einem weichen Polyvinylchlorid hergestellt (also einem relativ elastischen Material), so dass sich die Tülle 30 an die Form eines Kabels (nicht gezeigt) anpassen bzw. derart eng am Kabel anliegen kann, dass eine Dichtung zwischen dem Kabel und der Tülle 30 bereitgestellt werden kann. Darüber hinaus können an der Tülle 30 weitere Dichtmittel zum Umschließen des Kabels (beispielsweise elastische Dichtlippen) vorgesehen sein, um die Dichtwirkung noch weiter erhöhen zu können.

Bei einer bevorzugten Montage einer erfindungsgemäßen Verbindungsvorrichtung 10 wird zunächst der Sockel 20 mit dem auf der Auflagefläche 22 angeordneten Dichtring 40 in die Aussparung 51 des Wandungsabschnitts 50 eingeführt, bis die umlaufende Anlagefläche 21 des Sockels 20 mit der Innenfläche der Aussparung 51 in Anlage ist.

Zur Befestigung des Sockels 20 in der Aussparung 51 umfasst der Sockel 20, vorzugsweise an der Oberseite (beispielsweise angrenzend zur Anlagefläche 21), Rastmittel in Form einer umlaufenden Rastzunge (nicht gezeigt), die mit der Oberseite des Wandungsabschnitts 50 verrasten kann. Alternativ zur umlaufenden Rastzunge, können auch mehrere Rastabschnitte vorgesehen werden. Wesentlich dabei ist es, dass durch die Verrastung des Sockels 20 mit dem Wandungsabschnitt 50 die Drehbarkeit des Sockels 20 in der Aussparung 51 nicht wesentlich beeinträchtigt wird.

Abschließend wird die Tülle 30 in die Öffnung 23 des Sockels 20 eingeführt und mit diesem verrastet. Ein Kabel kann nunmehr durch die Tülle 30 in das Gehäuse der Leuchte hineingeschoben werden. Es besteht jedoch auch die Möglichkeit zunächst die Tülle 30 auf ein Kabel aufzuschieben, so dass diese bei der Verbindung des Kabels mit der Elektronik der Leuchte nicht stört. Anschließend kann die Tülle 30 bis zum Sockel 20 (genauer in die Öffnung 23 des Sockels 20) geschoben und mit diesem verrastet werden.

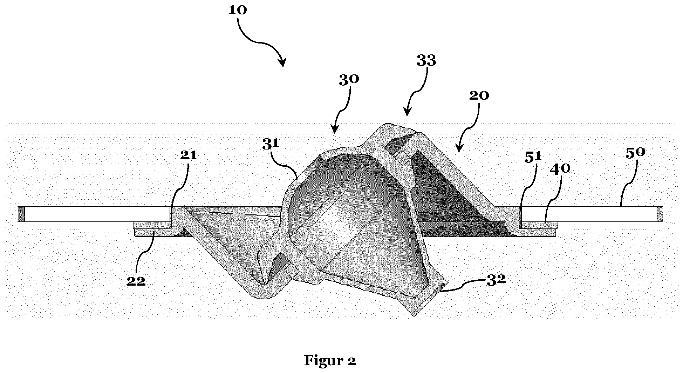

Figur 2 zeigt eine schematische Querschnittsansicht der in Figur 1 gezeigten Verbindungsvorrichtung 10 im eingebauten Zustand. Gleiche Teile sind mit gleichen Bezugszeichen versehen.

Wie in Figur 2 gut zu erkennen, umfasst die Tülle 30 umlaufende Rastmittel 33, mit denen die Tülle 30 mit dem Sockel 20 verrastet werden kann, wenn diese in der Öffnung 23 des Sockels 20 angeordnet ist. Die Rastmittel 33 sind dabei vorzugsweise aus einem elastischen Material hergestellt und bilden darüber hinaus einen dichten Sitz in der Öffnung 23 des Sockels 20. Ferner können im Hohlkörper der Tülle 20 Wandungsabschnitte (nicht gezeigt) vorgesehen sein, um während des Einführens eines Kabels eine Kabelführung bereitzustellen. Auch können im Hohlkörper oder an den Kabelöffnungen 31, 32 Fixiermittel (beispielsweise Rastzungen oder Fixierschlaufen) vorgesehen sein, um ein unbeabsichtigtes Herausgleiten des eingeführten Kabels aus der Verbindungsvorrichtung zu verhindern bzw. um eine entsprechende Kabelentlastung bereitzustellen.

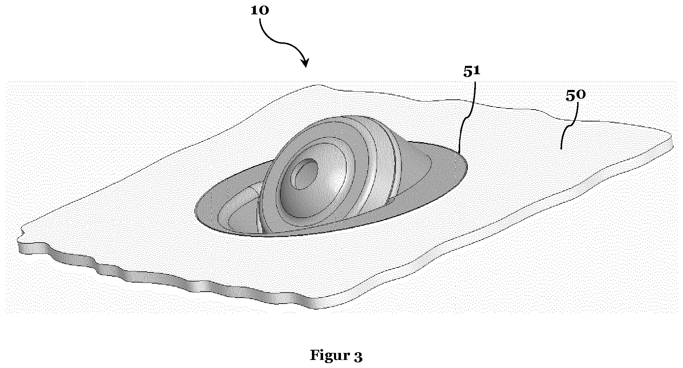

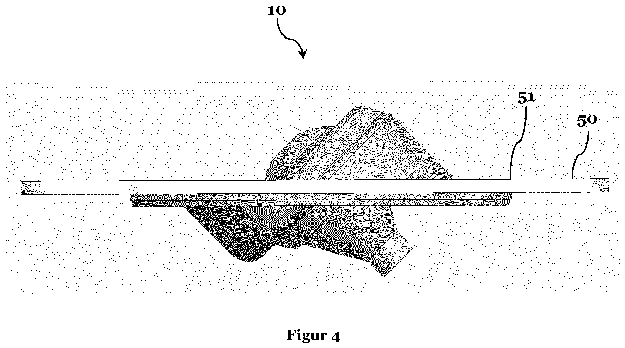

Die Figuren 3 und 4 zeigen weitere schematische Ansichten der in Figur 1 gezeigten Verbindungsvorrichtung 10 im eingebauten Zustand. Wie in den Figuren 2 bis 4 gut zu erkennen, ist der Sockel 20 derart ausgebildet, dass dieser (und damit auch die Tülle 30) im montierten Zustand zumindest teilweise in das Gehäuse der Leuchte hineinragt. Dadurch kann der Platzbedarf zwischen der Leuchte und der Wand, an der die Leuchte montiert werden soll, angepasst bzw. reduziert werden.

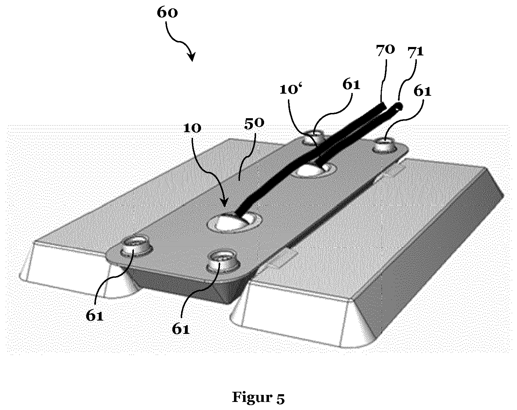

Figur 5 eine schematische Ansicht einer erfindungsgemäßen Leuchte 60, die zwei erfindungsgemäßen Verbindungsvorrichtungen 10, 10' umfasst, wobei die Verbindungsvorrichtungen 10, 10' in dieselbe Richtung ausgerichtet (gedreht) sind, so dass die in die oder aus der Leuchte 60 führenden Kabel 70, 71 in dieselbe Richtung weisen und ohne enge Radien geführt werden können. Die Leuchte 60 ist zur Montage an einer Raumdecke vorgesehen und umfasst hierfür in ihren Eckbereichen vier Abstandshalter 61. Die Verbindungsvorrichtungen 10, 10' sind dabei an der der Raumdecke zugewandten Seite der Leuchte 60 vorgesehen, d.h. durch die Abstandshalter 61 wird ein Zwischenraum zwischen der Leuchte 60 und der Montagewand (nicht gezeigt) definiert.

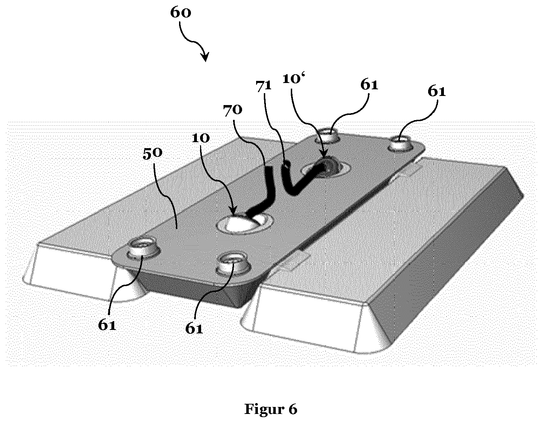

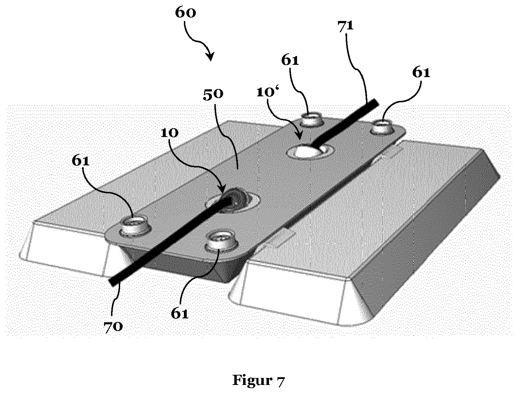

Figur 6 zeigt die in Figur 5 gezeigte Leuchte 60, wobei die zwei Verbindungsvorrichtungen 10, 10' nunmehr zueinander ausgerichtet sind, um Kabel 70, 71 in das bzw. aus dem Gehäuse der Leuchte 60 zu führen. Figur 7 zeigt ebenfalls die in Figur 5 gezeigte Leuchte 60, wobei die zwei Verbindungsvorrichtungen 10, 10' in entgegengesetzte Richtungen ausgerichtet sind, um Kabel 70, 71 in das bzw. aus dem Gehäuse der Leuchte 60 zu führen.

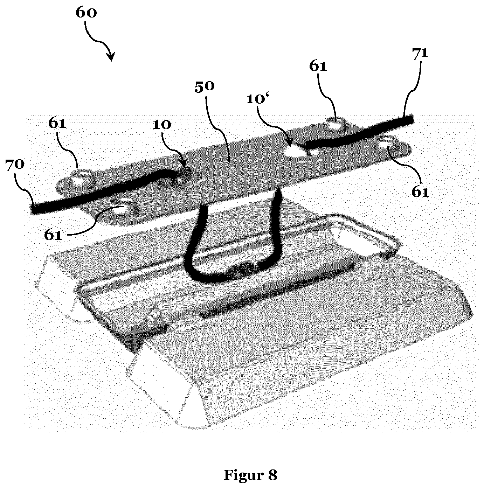

Figur 8 zeigt eine schematische Ansicht der in Figur 7 gezeigten Leuchte mit geöffnetem Gehäuse. Wie in Figur 8 gut zu erkennen, kann durch die angepasst Ausrichtung der Verbindungsvorrichtungen 10, 10' auch innerhalb des Gehäuses der Leuchte 60 eine Kabelführung ohne enge Radien bereitgestellt werden.

Wie in den Figuren 5 bis 7 gut zu erkennen, wird durch die angepasste Ausrichtung der Verbindungsvorrichtungen 10, 10' eine Kabelführung ermöglicht, die ohne engen Radien erfolgen kann und die hierfür darüber hinaus nur einen sehr geringen Zwischenraum zwischen Montagewand und dem Gehäuse der Leuchte benötigt. Ferner kann die erfindungsgemäßen Leute 60 einfach und schnell verkabelt werden, da hierfür keine Zugänge aus dem Gehäuse herausgebrochen werden müssen.

Die vorliegende Erfindung ist nicht auf das vorhergehende Ausführungsbeispiel beschränkt, solange sie vom Gegenstand der folgenden Ansprüche umfasst ist. Insbesondere kann alternativ oder zusätzlich zur oben beschriebenen Tülle auch ein drehbarer Sockel mit einem Steckverbinder, insbesondere einem elektrischen Steckverbinder zum Anschluss der Leuchte an eine Energieversorgung, verwendet werden. Eine Verbindung der Leuchte mit externen Kabeln erfolgt in diesem Fall dadurch, dass der Sockel zum Kabel hingedreht wird und der Steckverbinder mit einem am Kabel vorgesehenen korrespondierenden Steckverbinder verbunden wird.

## Patentansprüche

1. Leuchte (60) umfassend zumindest eine Verbindungsvorrichtung (10, 10'),
wobei die Verbindungsvorrichtung (10, 10') einen Sockel (20) umfasst, der mit einem Gehäuse der Leuchte (60) verbunden ist;
wobei der Sockel (20) zumindest eine umlaufende kreisförmige Anlagefläche (21) aufweist, die angepasst ist, um in eine korrespondierende kreisförmige Aussparung (51) eines Wandungsabschnitts (50) des Gehäuses der Leuchte (60) eingeführt zu werden, und die Anlagefläche (21) mit der Aussparung (51) des Gehäuses der Leuchte (60) derart in Anlage bringbar ist, dass der Sockel (20) drehbar in der Aussparung (51) des Gehäuses der Leuchte (60) angeordnet ist,
wobei der Sockel (20) eine Öffnung (23) aufweist, welche im verbundenen Zustand von Sockel (20) und Gehäuse bezüglich der Aussparung (51) des Gehäuses geneigt angeordnet ist und welche angepasst ist, eine als Hohlkörper mit einer außenliegenden Kabelöffnung (31) und einer innenliegenden Kabelöffnung (32) ausgebildete Tülle (30) aufzunehmen, und
wobei die Verbindungsvorrichtung (10, 10') als integrales einstückiges Bauteil ausgebildet ist.

2. Leuchte (60) nach Anspruch 1, wobei die Tülle (30) an dem Sockel (20) angeordnet ist und in die Tülle (30) ein Kabel (70, 71), insbesondere ein Energieversorgungskabel, in das Gehäuse der Leuchte (60) einführbar ist.

3. Leuchte (60) nach einem der Ansprüche 1 oder 2, wobei am Sockel (20) ein Steckverbinder vorgesehen ist, insbesondere ein elektrischer Steckverbinder zur Energieversorgung der Leuchte (60).

4. Leuchte (60) nach einem der vorhergehenden Ansprüche, wobei der Sockel (20) aus einem unelastischen Material bereitgestellt ist, insbesondere aus einem Duroplast.

5. Leuchte (60) nach einem der Ansprüche 2 bis 4, wobei die Tülle (30) aus einem elastischen Material bereitgestellt ist, insbesondere aus einem Polyurethan oder einem Polyvinylchlorid.

6. Leuchte (60) nach einem der Ansprüche 2 bis 5, wobei die Tülle (30) bezüglich der Aussparung (51) des Wandungsabschnitts (50, 51) des Gehäuses geneigt angeordnet ist, insbesondere mit einem Winkel zwischen 25° bis 80° DEG, vorzugsweise zwischen 35° bis 60° DEG, weiterhin bevorzugt zwischen 40° bis 50° DEG und besonders bevorzugt mit einem Winkel von 45° DEG.

7. Leuchte (60) nach einem der vorhergehenden Ansprüche, wobei der Sockel (20) derart ausgebildet ist, dass dieser im montierten Zustand zumindest teilweise in das Gehäuse der Leuchte (60) hineinragt.

8. Leuchte (60) nach einem der Ansprüche 2 bis 7, wobei an der Tülle (30) Dichtmittel zum Umschließen des Kabels (70, 71) vorgesehen sind, insbesondere elastische Dichtlippen.

9. Leuchte (60) nach einem der vorhergehenden Ansprüche, wobei der Sockel (20) Dichtmittel (40) umfasst, um eine dichtende Verbindung mit dem Wandungsabschnitt (50, 51) des Gehäuses der Leuchte (60) bereitzustellen, vorzugsweise umfassen die Dichtmittel (40) dabei zumindest eine umlaufende Dichtlippe oder einen umlaufenden Dichtring (40).

10. Leuchte (60) nach einem der vorhergehenden Ansprüche, wobei am Sockel (20) Rastmittel zum Verrasten mit dem Wandungsabschnitt (50, 51) des Gehäuses der Leuchte (60) vorgesehen sind, wobei die Rastmittel vorzugsweise eine umlaufende Rastzunge oder mehrere Rastabschnitte umfassen.

11. Leuchte (60) nach einem der vorhergehenden Ansprüche, wobei die Verbindungsvorrichtung (10, 10') mittels eines 2-Komponenten-Spritzgußverfahrens hergestellt ist.

12. Leuchte (60) nach einem der vorhergehenden Ansprüche, wobei die Leuchte (60) eine Feuchtraumleuchte ist.

13. Leuchte (60) nach einem der vorhergehenden Ansprüche, wobei die Leuchte (60) an einer Raumdecke anordenbar ist und die zumindest eine Verbindungsvorrichtung (10, 10') an der der Raumdecke zugewandten Seite der Leuchte (60) vorgesehen ist.

14. Leuchte (60) nach Anspruch 13, wobei die Leuchte (60) an der der Raumdecke zugewandten Seite Abstandshalter (61) umfasst, um im montierten Zustand einen vordefinierten Abstand der Leuchte (60) zur Raumdecke bereitzustellen.

## Claims

1. Luminaire (60) comprising at least one connection device (10, 10'),
wherein the connection device (10, 10') comprises a base (20) connected to a housing of the luminaire (60);
wherein the base (20) has at least one circumferential circular contact surface (21) which is adapted to be inserted into a corresponding circular recess (51) in a wall portion (50) of the housing of the luminaire (60), and the contact surface (21) can be brought into contact with the recess (51) in the housing of the luminaire (60) in such a way that the base (20) is rotatably arranged in the recess (51) in the housing of the luminaire (60),
wherein the base (20) has an opening (23) which, in the connected state of the base (20) and the housing, is arranged so as to be inclined relative to the recess (51) in the housing and which is adapted to receive a grommet (30) formed as a hollow body with an outer cable opening (31) and an inner cable opening (32), and
wherein the connection device (10, 10') is designed as an integral, one-piece component.

2. Luminaire (60) according to claim 1, wherein the grommet (30) is arranged on the base (20) and a cable (70, 71), in particular a power supply cable, is insertable into the grommet (30) into the housing of the luminaire (60).

3. Luminaire (60) according to any of claims 1 or 2, wherein a plug connector is provided on the base (20), in particular an electrical plug connector for supplying power to the luminaire (60).

4. Luminaire (60) according to any of the preceding claims, wherein the base (20) is provided from an inelastic material, in particular a thermosetting plastic.

5. Luminaire (60) according to any of claims 2 to 4, wherein the grommet (30) is provided from an elastic material, in particular a polyurethane or a polyvinyl chloride.

6. Luminaire (60) according to any of claims 2 to 5, wherein the grommet (30) is arranged so as to be inclined relative to the recess (51) in the wall portion (50, 51) of the housing, in particular at an angle between 25° and 80° DEG, preferably between 35° and 60° DEG, further preferably between 40° and 50° DEG, and particularly preferably at an angle of 45° DEG.

7. Luminaire (60) according to any of the preceding claims, wherein the base (20) is designed such that, in the mounted state, it projects at least partially into the housing of the luminaire (60).

8. Luminaire (60) according to any of claims 2 to 7, wherein sealing means for enclosing the cable (70, 71), in particular elastic sealing lips, are provided on the grommet (30).

9. Luminaire (60) according to any of the preceding claims, wherein the base (20) comprises sealing means (40) in order to provide a sealing connection to the wall portion (50, 51) of the housing of the luminaire (60), and preferably the sealing means (40) comprise at least one circumferential sealing lip or circumferential sealing ring (40).

10. Luminaire (60) according to any of the preceding claims, wherein latching means are provided on the base (20) for latching to the wall portion (50, 51) of the housing of the luminaire (60), the latching means preferably comprising a circumferential latching tongue or a plurality of latching portions.

11. Luminaire (60) according to any of the preceding claims, wherein the connection device (10, 10') is produced by means of a 2-component injection molding process.

12. Luminaire (60) according to any of the preceding claims, wherein the luminaire (60) is a moisture-proof luminaire.

13. Luminaire (60) according to any of the preceding claims, wherein the luminaire (60) can be arranged on a room ceiling and the at least one connection device (10, 10') is provided on the side of the luminaire (60) facing the room ceiling.

14. Luminaire (60) according to claim 13, wherein the luminaire (60) comprises spacers (61) on the side facing the room ceiling in order to provide a predefined distance between the luminaire (60) and the room ceiling in the mounted state.

## Revendications

1. Luminaire (60) comprenant au moins un dispositif de connexion (10, 10'),
le dispositif de connexion (10, 10') comprenant un socle (20) qui est connecté à un boîtier du luminaire (60) ;
le socle (20) présentant au moins une surface d'appui circulaire (21) circonférentielle, qui est adaptée pour être insérée dans une cavité circulaire (51) correspondante d'une section de paroi (50) du boîtier du luminaire (60) et la surface d'appui (21) pouvant être mise en appui avec la cavité (51) du boîtier du luminaire (60) de telle façon que le socle (20) est disposé de façon rotative dans la cavité (51) du boîtier de luminaire (60),
le socle (20) présentant une ouverture (23), laquelle, dans l'état connecté du socle (20) et du boîtier, est disposée inclinée par rapport à la cavité (51) du boîtier et laquelle est adaptée pour recevoir une douille (30) conçue comme un corps creux comportant une ouverture de câble (31) extérieure et une ouverture de câble (32) intérieure et
le dispositif de connexion (10, 10') étant conçu comme un composant d'un seul tenant intégré.

2. Luminaire (60) selon la revendication 1, la douille (30) étant disposée sur le socle (20) et un câble (70, 71), en particulier un câble d'alimentation électrique, pouvant être introduit dans la douille (30) dans le boîtier du luminaire (60).

3. Luminaire (60) selon l'une des revendications 1 ou 2, un connecteur enfichable, en particulier un connecteur enfichable électrique pour l'alimentation électrique du luminaire (60), étant prévu sur le socle (20).

4. Luminaire (60) selon l'une des revendications précédentes, le socle (20) étant fourni en un matériau inélastique, en particulier en un plastique thermodurcissable.

5. Luminaire (60) selon l'une des revendications 2 à 4, la douille (30) étant fournie en un matériau élastique, en particulier en un polyuréthane ou un chlorure de polyvinyle.

6. Luminaire (60) selon l'une des revendications 2 à 5, la douille (30) étant disposée inclinée par rapport à la cavité (51) de la section de paroi (50, 51) du boîtier, en particulier à un angle compris entre 25° et 80° DEG, de préférence entre 35° et 60° DEG, encore de préférence entre 40° et 50° DEG et de manière particulièrement préférée à un angle de 45° DEG.

7. Luminaire (60) selon l'une des revendications précédentes, le socle (20) étant conçu de telle façon qu'à l'état monté celui-ci fait au moins partiellement saillie dans le boîtier du luminaire (60).

8. Luminaire (60) selon l'une des revendications 2 à 7, des moyens d'étanchéité pour entourer le câble (70, 71) étant prévus sur la douille (30), en particulier des lèvres d'étanchéité élastiques.

9. Luminaire (60) selon l'une des revendications précédentes, le socle (20) comprenant des moyens d'étanchéité (40), afin de fournir une connexion étanche avec la section de paroi (50, 51) du boîtier du luminaire (60), les moyens d'étanchéité (40) comprenant de préférence au moins une lèvre d'étanchéité circonférentielle ou une bague d'étanchéité (40) circonférentielle.

10. Luminaire (60) selon l'une des revendications précédentes, des moyens d'encliquetage pour l'encliquetage sur la section de paroi (50, 51) du boîtier du luminaire (60) étant prévus sur le socle (20), les moyens d'encliquetage comprenant de préférence une languette d'encliquetage circonférentielle ou plusieurs sections d'encliquetage.

11. Luminaire (60) selon l'une des revendications précédentes, le dispositif de connexion (10, 10') étant fabriqué au moyen d'un procédé de moulage par injection à 2 composants.

12. Luminaire (60) selon l'une des revendications précédentes, dans lequel le luminaire (60) est un luminaire pour locaux humides.

13. Luminaire (60) selon l'une des revendications précédentes, le luminaire (60) pouvant être disposé sur un plafond de salle et l'au moins un dispositif de connexion (10, 10') étant prévu sur le côté du luminaire (60) faisant face au plafond de salle.

14. Luminaire (60) selon la revendication 13, le luminaire (60) comprenant des écarteurs (61) sur le côté faisant face au plafond de salle, afin de fournir à l'état monté une distance prédéfinie du luminaire (60) au plafond de salle.
